# EUROPEAN PATENT APPLICATION

(11) **EP 2 073 098 A2**
(43) Date of publication of application: **24.06.2009**
(21) Application number: 08254044.4
(22) Date of filing: 17.12.2008
(51) Int. Cl.: G06F 1/32

(54) **Device, system, and method of power saving using location sensing modules**

(30) Priority: 20.12.2007 US 4111
(71) Applicant: Intel Corporation, Santa Clara, CA 95052 (US)
(72) Inventor: Karkaria, Burges M., San Jose, CA 95136 (US); Zimmer, Vincent J., Federal Way, WA 98003 (US); Baca, Jim S., Corrales, NM 87048 (US)
(74) Representative: Want, Clifford James

(57) **Abstract**

A method, apparatus and system for, in a computing apparatus, periodically activating a location operating system detecting a substantial change in the location of the apparatus, selecting a computing environment from a predetermined set of computing environments based on the change in the location of the apparatus, where the selected computing environment may be the most appropriate computing environment for the changed location, and altering the power mode of one or more components of the apparatus, specified by the selected computing environment.

## Description

### BACKGROUND OF THE INVENTION

An apparatus such as a wireless device, personal computer (PC), personal digital assistant (PDA), etc., may determine its surrounding environment, for example, by detecting signals from a nearby apparatus over a network such as a wireless local area network (WLAN). The surrounding environment may include real and/or virtual environments. The apparatus may identify, interact, form wired or wireless connections, and receive or transmit signals, with other apparatuses in the surrounding environment. However, the information the apparatus identifies concerning its surrounding environment may be limited.

A need exists for wider integration capabilities for an apparatus into its surrounding environment.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings in which:
Fig. 1 is a schematic illustration of a system according to an embodiment of the present invention; and
Fig. 2 is a flow chart of a method according to an embodiment of the present invention.

It will be appreciated that for simplicity and clarity of illustration, elements shown in the drawings have not necessarily been drawn accurately or to scale. For example, the dimensions of some of the elements may be exaggerated relative to other elements for clarity or several physical components included in one functional block or element. Further, where considered appropriate, reference numerals may be repeated among the drawings to indicate corresponding or analogous elements. Moreover, some of the blocks depicted in the drawings may be combined into a single function.

### DETAILED DESCRIPTION OF THE INVENTION

In the following detailed description, numerous specific details are set forth in order to provide a thorough understanding of the invention. However it will be understood by those of ordinary skill in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters and the like.

It should be understood that the present invention may be used in a variety of applications. Although the present invention is not limited in this respect, the circuits and techniques disclosed herein may be used in many apparatuses such as personal computers, stations of a radio system, wireless communication system, digital communication system, satellite communication system, and the like.

Embodiments of the invention may be used in a variety of applications. Some embodiments of the invention may be used in conjunction with many computing apparatuses and systems, for example, wired or wireless stations including transmitters, receivers, transceivers, transmitter-receivers, wireless communication stations, wireless communication devices, wireless access points (APs), modems, wireless modems, personal computers, desktop computers, mobile computers, laptop computers, notebook computers, personal digital assistant (PDA) devices, tablet computers, server computers, networks, wireless networks, local area networks (LANs), wireless LANs, devices and/or networks operating in accordance with existing IEEE 802.11 standards ("IEEE Standard for Wireless LAN Medium Access Control (MAC) and Physical Layer (PHY) Specification. 1999 Edition", reaffirmed June 12, 2003), such as, 802.11 a, 802.11b, 802.11e, 802.11g, 802.11 h, 802.11i, 802.11n, 802.16 standards ("IEEE Standard for Local and Metropolitan Area Networks - Part 16: Air Interface for Fixed Broadband Wireless Access System", October 1, 2004), and/or future versions of the above standards, personal area networks (PAN), wireless PANs (WPANs), units and/or devices which are part of the above WLAN and/or PAN and/or WPAN networks, one way and/or two-way radio communication systems, cellular radio-telephone communication systems, cellular telephones, wireless telephones, personal communication systems (PCS) devices, PDA devices which may incorporate wireless communication devices, multiple input multiple output (MIMO) transceivers or devices, single input multiple output (SIMO) transceivers or devices, multiple input single output (MISO) transceivers or devices, multi receiver chain (MRC) transceivers or devices, transceivers or devices having "smart antenna" technology or multiple antenna technology, or the like. Some embodiments of the invention may be used in conjunction with one or more types of wireless communication signals and/or systems, for example, radio frequency (RF), infra red (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, multi-carrier modulation (MDM), or the like. Embodiments of the invention may be used in various other apparatuses, devices, systems and/or networks.

In one embodiment, a device (e.g., a cellular telephone, a PDA, a portable computer) may periodically activate a location operating system for detecting a change in the location of the device based on for example signals transmitted in a surrounding area. For example, the device may be carried by a user from his apartment to his automobile. As the user changes locations, the device or components of the device may be in for example a sense shutdown mode. Once the user has entered his automobile, after a period of time the sense shutdown mode may be timed out and the location operating system may be activated (e.g., according to a periodic function of time). The location operating system may detect a change in environment and, for example, may recognize that the user is in his automobile. For example, a sensor may detect motion in the external environment that substantially matches global positioning systems (GPS) mechanisms in an "automobile mode". The location operating system may trigger the activation of a policy engine or other suitable unit or application for determining and applying the appropriate computing environment for the changed location (e.g., the automobile). For example, the capability operating system may activate the "automobile mode" policy.

Other ways of determining a location or change in location, possibly not using signals, may be used. For example, noise level or sounds may be detected, a camera or light meter may detect visual cues, certain network or other radio traffic may be detected, motion detectors may detect the presence or absence of motion, etc.

Although embodiments of the invention are not limited in this regard, the terms "deactivated" or "power save" mode as used herein may include, for example, an idle mode, a hibernation mode, a standby mode, a power conservation mode, reduced power mode, an efficiency mode, a "sleep" mode, a semi-operational mode, a semi-active mode, a partially-active mode, or other modes of operations in which a component, such as a transceiver or a sub-unit thereof, is not fully operational and/or active, or is completely inactive or off.

Activating may include directly or indirectly, initializing, triggering, switching, and/or starting a change in activity or mode, for example, from an off, inactive, lower power, power down and/or power save mode, to an on, active, higher power, power up, or ready mode. Activating may be executed, initialized, triggered, or maintained, for example, using a control unit or a power control unit.

Periodically activating may include activating and/or deactivating according to fixed or variable time schemes. The duration of scanning for detecting a change in the location of an apparatus, which may be activated according to such time schemes, may have a fixed or variable duration of time. Periodically activating need not imply activating according to fixed or repeating time schemes. Periodically activating may include activating using time schemes supported by embodiments of the invention, for example, variable time schemes. Time schemes for activation may be fixed, repeating, variable or random, or may be defined by any suitable function of time, determined or modulated by a sense operating system (OS) or module. In some embodiments, operating system (OS) may include any system, device, module, applications, process, or combination thereof for implementing the mechanisms described herein.

According to embodiments of the invention, a computing apparatus such as a cellular telephone or a wireless device, such as a wireless computer, wireless headset, or wireless keyboard, may include a location OS or location module for detecting a change in the location or environment of the apparatus and a capability OS for modifying the computing environment of the apparatus, accordingly. In some embodiments, the capability OS or capability module may be activated (e.g., by the location OS or module, directly or indirectly) from a power save mode when such a change in location is detected. In other embodiments, the capability OS may be continuously activated.

According to embodiments of the invention, an apparatus may include a sense OS or module for periodically activating the location OS or module. In some embodiments, the location OS may be activated (e.g., directly or indirectly by the sense OS) according to a function or time or with a periodicity, for example, determined by the sense OS or module.

In some embodiments, the sense OS or module may be continuously substantially active (e.g., operating at low power relative to an active location OS) so that the location OS or module may periodically enter a deactivated or power save mode. Since the sense OS consumes relatively less power than the location OS, continually activating the sense OS to enable the deactivation of the location OS may decrease the overall power consumption of the system.

In other embodiments, the sense OS or module may enter power save modes (e.g., according to a user request, when an apparatus is off, when an apparatus is connected to another object via wires and location change may be determined to be minimal, etc.).

In some embodiments, in an apparatus, a location operating system or detection system which detects a substantial change in the location of the apparatus may be periodically activated, and a unit within the apparatus may select a computing mode or computing environment from a predetermined set of computing environments based on the change in the location of the apparatus, where the selected computing environment is the most appropriate computing environment for the changed location, and may alter the power mode of one or more components of the apparatus, specified by the selected computing environment.

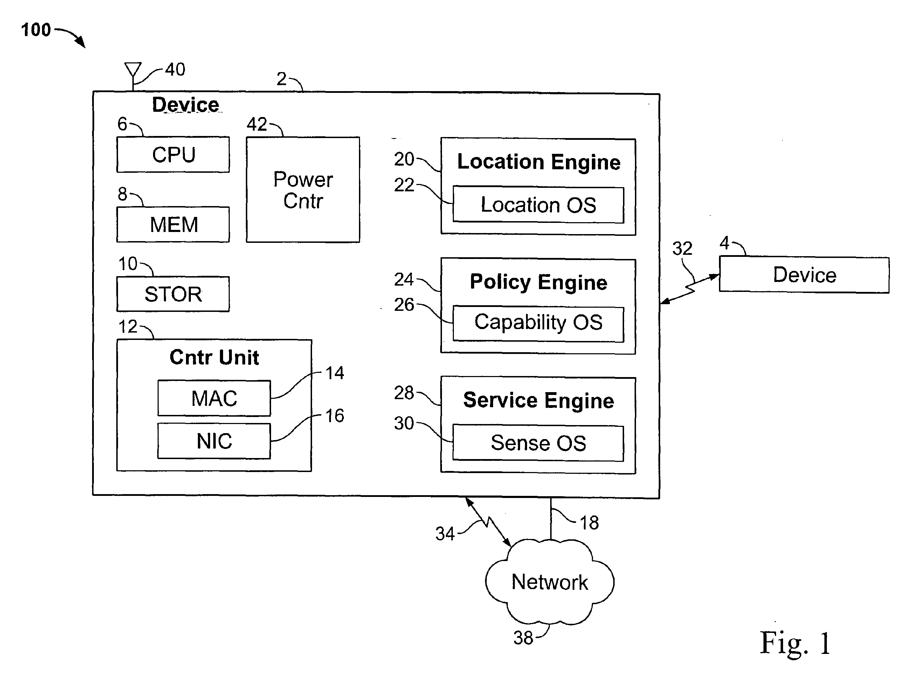

Reference is made to Fig. 1, which schematically illustrates a system 100 according to a demonstrative embodiment of the present invention. It will be appreciated by those skilled in the art that the simplified components schematically illustrated in Fig. 1 are intended for demonstration purposes only, and that other components may be used for operation of system 100. Those of skill in the art will further note that the connection between components in a wireless system need not necessarily be exactly as depicted in the schematic diagram.

System 100 may include two or more devices 2 and 4, for example, wireless stations, cellular telephones, portable computers, access points, and the like. It will be appreciated that the network architecture described in system 100 may enable wireless or wired communications among devices in accordance with embodiments of the present invention. Devices 2 and 4 may be in substantially the same local or nearby area.

Device 2 may include sensor 40, for example, an antenna, for transmitting and/or receiving signals, sensing, detecting, and otherwise communication with external elements. Device 2 may include control unit 12. Control unit 12 may include medium access control (MAC) 14, and a wireless interface device such as a network interface card (NIC) 16. Device 2 may include one or more controller(s) or processor(s) 6, such as a central processing unit (CPU), a memory unit 8, and a storage unit 10. Device 2 may include a power control unit 42, including, for example, a basic input/output system (BIOS). In some embodiments, the functionality of power control unit 42 may be effected by, e.g., processor 6 and/or control unit 12 executing instructions. The device 2 may use control unit 12 to activate and/or deactivate various components of device 2, using, for example, power control unit 42 for altering a power mode of, or power supplied to, the components. In some embodiments, power control unit 42 and control unit 12 may be synchronized or work in unison for activating and/or deactivating the various components of device 2.

Devices 2 and 4, may communicate via traffic 32, for example, over a shared access medium, e.g., using one or more wireless links as are known in the art. Although embodiments of the invention are not limited in this respect, traffic 32 may include packets or other collections of signals and/or data, such as, e.g., media access control service data units (MSDUs) that may make up a transmission of wireless signals, delivery traffic indication messages (DTIMs) informing clients of the next window for listening to broadcast and multicast messages, beacon frames, helping wireless stations identify nearby wireless access points, for example, sent periodically, with a period of a beacon interval, etc. In some embodiments, device 2 may communicate with a wider network 38 such as, for example, the Internet or an intranet, either wirelessly or via communication wires 18. In other embodiments, device 2 and device 4 may communicate directly with wider network 38, via traffic 34.

Although embodiments of the invention are not limited in this respect, sensor 40 may include or may be, for example, internal and/or external wireless radios, radio frequency (RF) antennas, Web-accessible cameras, GPS, audio capture devices, or other devices for receiving signals from an external or surrounding environment. Sensor 40 may include a motion detector, accelerometer, light detector, microphone, or other sensor. In various embodiments, signals generated or captured by sensor 40 may include, for example, image data, audio data, location data, pressure data, temperature data, frequency data, speed or acceleration data, or any other data that may be collected by a known sensor. RF antennas may include, for example, a dipole antenna, a monopole antenna, an omni-directional antenna, an end-fed antenna, a circularly polarized antenna, a micro-strip antenna, a diversity antenna, or any other type of antenna suitable for transmitting and/or receiving information indicating the surrounding environment, such as, visual images, audio samples, global positioning information, wireless communication signals, blocks, frames, transmission streams, packets, messages and/or data.

In some embodiments, NIC 16 may provide functionality related to the data link layer of the seven-layer Open Systems Interconnection (OSI) reference model of network communications. Although embodiments of the invention are not limited in this respect, MAC 14 may be included within NIC 16, or MAC 14 may be a separate component in device 2. For example, MAC 14 may function as a device driver, as is known in the art, for NIC 16. In some embodiments, MAC 14 may include an upper MAC layer and a lower MAC layer, as are known in the art. The lower MAC layer may, for example, be included within NIC 16. Control unit 12 may periodically activate location OS 22 for detecting a change in the location of device 2 based on signals transmitted in a surrounding area. In some embodiments, the timing of activating location OS 22 may be controlled by components, for example, internal timers, of control unit 12. NIC 16 may include other elements or connections than described herein.

Although embodiments of the invention are not limited in this respect, processor 6 may include, for example, a CPU, a digital signal processor (DSP), a microprocessor, a controller, a chip, a microchip, an integrated circuit (IC), or any other suitable multipurpose or specific processor or controller. Memory unit 8 may include, for example, a random access memory (RAM), a read only memory (ROM), a dynamic RAM (DRAM), a synchronous DRAM (SD-RAM), a flash memory, a volatile memory, a non-volatile memory, a cache memory, a buffer, a short term memory unit, a long term memory unit, or other suitable memory units or storage units. Storage units 10 may include, for example, a hard disk drive, a floppy disk drive, a compact disk (CD) drive, a CD-ROM drive, or other suitable removable or non-removable storage units. In some embodiments, instructions may be recorded or stored, for example, in storage medium 10, and may be executed to perform a method in accordance with an embodiment of the invention.

Device 2 may include a location engine 20 having a location OS or module 22, a policy engine 24 having a capabilities OS or module 26, and a service engine 28 having a sense or module OS 30. In some embodiments, location OS 22 may detect changes in the location of device 2, for example, based on the signals received by sensor 40. In some embodiments, sensor 40 may be a part of location engine 20 and/or location OS or module 22. In some embodiments, activating location OS or module 22 may include increasing the power applied to sensor 40, for example, for changing the state of the sensor from a power save mode to an active mode. In some embodiments, location engine 20 and/or location OS 22 may include software and/or hardware for sensing or detecting locations and environments, such as, Intel® active management technology (AMT), applications, drivers, and/or other elements for sensing or detecting locations. Capabilities OS 26 may determine the appropriate computing environment for device 2 based on the detected changes in location. Policy engine 24 may modify the computing environment of device 2 accordingly. In some embodiments, the changes in the location of device 2 detected by location OS 22 and the computing environment determined by capabilities OS 26, may be modified or updated, for example, based on user input. Each of location engine 20, location OS or module 22, policy engine 24, capabilities OS or module 26, service engine 28, and sense OS or module 30 may be implemented, for example, in software such as a series of instructions stored in memory 8 executed by a processor (e.g., processor or controller 6) or controller (e.g., control unit 12) or for example by one or more dedicated hardware devices such as chips or other circuits. Operating systems or modules, described herein may be implemented in other manners.

Embodiments of the present invention may provide a "shutdown" or power save mode, which may, for example be referred to as, a "sense" mode. The sense mode may use service engine 28 for periodically activating location operating engine 20 that may detect a change in the location of an apparatus (e.g., device 2) based on for example signals transmitted in a surrounding area (e.g., from device 4 or network 38), and policy engine 24 for modifying the computing environment of the apparatus when a change in location is detected. In some embodiments, each of service engine 28, policy engine 24, and location engine 20, may be a hypervisor (Hv) or a virtual machine manager (VMM). Embodiments of the present invention may provide maximally dormant environments, for example, for policy engine 24 and location engine 20, for efficient and minimal power consumption.

In some embodiments, sense OS 30 may manage capability OS 26 and location OS 22 differently. For example, sense OS 30 may directly activate or trigger the activation of location OS 22 (e.g., via service engine 28 and/or control unit 12) and may indirectly activate or trigger the activation of capability OS 26. For example, location engine 20 and/or location OS 22 including applications, drivers, and/or other elements for sensing or detecting locations, may be activated periodically for detecting location changes (e.g., by control unit 12). In some embodiments, policy engine 24 may be activated if substantial changes in location are detected and left dormant or deactivated if no substantial changes in location are detected. Policy Engine 24 and/or capability OS 26 may be used to determine if a computing platform needs to be reawakened and the appropriate computing platform or environment. In some embodiments, capability OS 26 may determine if a change in location is substantial or above a predetermined threshold for modifying the computing environment.

In one embodiment, device 2 (e.g., a cellular telephone or laptop computer) is carried by a user from a first location or environment (e.g., a work office) to a second location (e.g., an automobile or other mode of transportation). For example, as the user walks from his office to his automobile, device 2 may be in sense shutdown mode. When the user enters his automobile, after a period of time (e.g., the interval of time for applying the power save or deactivated mode to the location engine 20) expires, the location engine 20 may be activated according to a periodic function of time (e.g., determined by sense OS 30). Location OS 22 may detect a change in environment and, for example, may recognize that the user is in his automobile. For example, an external camera may read an image of the external environment that substantially matches an image indicating an "automobile mode". Location OS 22 may trigger the activation of policy engine 24 for determining and applying the appropriate computing environment for the changed location (e.g., the automobile). For example, capability OS 26, for example, using control unit 12, may activate the "automobile mode" policy, for example, including starting or launching a global positioning system (GPS) application, powering up or waking up GPS hardware, altering the power or operation mode of a personal Voice over Internet Protocol (VOIP), and/or a song play list mode. Components (including applications) may be powered down according to a computing environment.

Capability OS 26 may also deactivate or otherwise alter the power mode of unnecessary components, for example, applied when the user was in a previous location (e.g., the work office, having a local wireless network). For example, capability OS 26 may deactivate "office mode" computing environment applications, which may include for example email applications, a calendar of events, etc. In some embodiments the user may modify or set policies used to determine computing environments. For example, a user may customize a policy according to desired applications to be activated by policy engine 24 at specific locations detected by location engine 20.

System 100 may be employed as a virtual machine. In some embodiments, operating systems 22, 26, and/or 30 may include virtual environments. In other embodiments, operating systems 22, 26, and/or 30, may include real environments. Persons of ordinary skill in the art will appreciate that the methods and apparatus described herein (e.g., for providing the capabilities of operating systems 22, 26, and/or 30) may be accomplished on any system having, for example, virtual or real operating systems, a single or multiple processors 6 and a single or multiple operating systems 22, 26, and/or 30, or any combination of these elements.

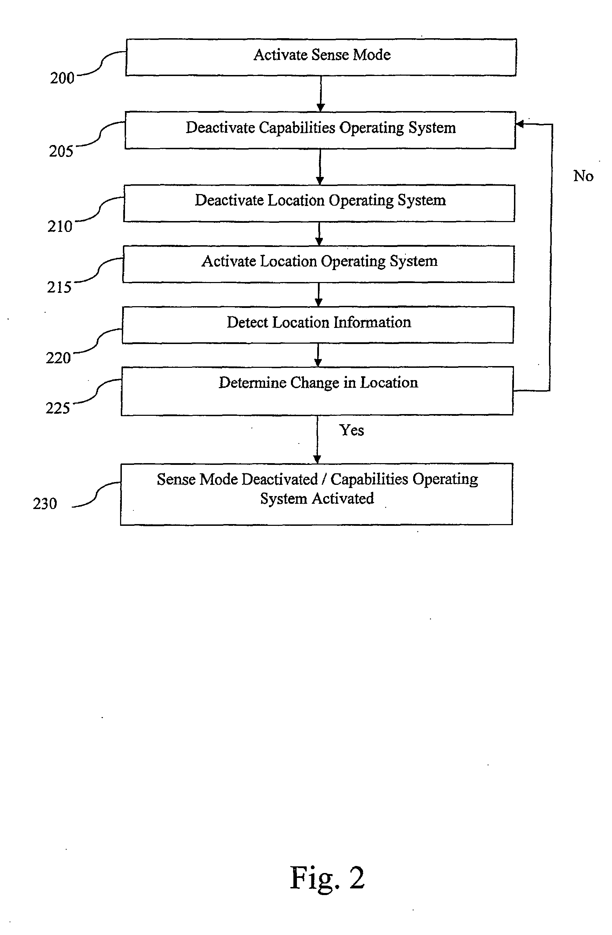

Reference is made to Fig. 2, which is a flow chart of a method according to an embodiment of the invention.

In operation 200, a computing apparatus (e.g. device 2) may invoke or activate (e.g., using control unit 12 and/or power control unit 42) a sense mode, activating a service engine (e.g. service engine 28) having a sense OS or module (e.g., sense OS 30). In some embodiments, the sense OS may be continuously substantially active (e.g., operating at low power relative to an active location OS). In one embodiment, the sense mode may track time or other processes (e.g., using a timer) for periodically activating a location OS, which may in turn detect a change in the location of the apparatus and activate a capabilities OS for activating appropriate user applications. In one embodiment, the sense mode may initiate the following processes according to predetermined intervals of time. In one embodiment, the service engine may initiate the periodic activation of the location OS, for example, via a control unit, controller, CPU, or switch.

In operation 205, a policy engine (e.g., policy engine 24) having a capabilities OS or module (e.g., capabilities OS 26) may be deactivated. In some embodiments, in sense mode the policy engine may have a default setting, for example, of hibernation, power save or deactivated mode.

In operation 210, the location engine (e.g., location engine 20) having a location OS or module (e.g., location OS 22) and a sensor (e.g., sensor 40) may be deactivated (e.g., by control unit 12). In some embodiments, the policy engine may have a default setting in sense mode, for example, hibernation, power save or deactivated mode. In some embodiments, the location engine and/or location OS may be deactivated periodically by the computing apparatus, via a control unit, CPU, switch, or other appropriate component thereof. In some embodiments, periodically deactivating the location engine or operating system may include decreasing the power applied to a sensor (e.g., sensor 40) for changing the state of the sensor from an active mode to a power save mode.

In operation 215, the sense mode may activate the location OS, according to a periodic function of time, for example, determined by the sense OS. The periodicity of the function of time may be constant, non-constant, cyclic, recursive, variable, and/or random, depending on system specifications. The function of time may be variable or dynamic. For example, the periodicity determined by a sense OS may be modified or normalized according to user input. For example, the user may override the application of power to various operating systems or modules by initiating other processes, for example, turning a power on or off, inputting another device or information file, etc.

In some embodiments, the periodic activation and/or deactivation of various components (e.g., location OS 22 and sensor 40) may be determined by a timer (e.g., internal timer of control unit 12), for example, when the timer may indicate a predetermined time interval has elapsed.

In some embodiments, the location engine and/or location OS may be deactivated periodically by the computing apparatus, via a control unit, power control unit, CPU, switch, or other appropriate component thereof. In some embodiments, periodically activating the location operating system comprises increasing the power applied to a sensor (e.g., sensor 40) for changing the state of the sensor from a power save mode to an active mode.

In operation 220, sensors (e.g., antenna 40) may detect location information. In some embodiments, the sensors may include AMT, applications, drivers, and/or other elements for sensing or detecting locations.

In one embodiment, the location OS may detect a change in the location of the device based on signals transmitted in a surrounding area. For example, a sensor may detect motion in the external environment using for example a GPS mechanism, or an external camera, which may read an image (e.g., a still or moving image) of the external environment that substantially changes over time.

In operation 225, the location OS may determine if there is a change in the location of the apparatus. In some embodiments, the location OS may compare the information detected in operation 220 with previously detected location information, which may be stored, for example, in a memory (e.g., memory 8). In some embodiments, the location OS may set a threshold for determining if current location information has substantially changed. For example, change in the location of the apparatus may be detected when the information detected in operation 220 may substantially differ from previously detected location information (e.g., the comparison yield a difference above a set threshold). For example, in contrast, a user's living room may be considered substantially similar to the user's study and thus, such a change in location (e.g., below a certain change threshold) would not be detected. If a change is detected, a process may proceed to operation 230. A threshold may be, for example, a distance such as measured in yards or meters, or for example the need to use a different channel, or for example a need to associate with a different AP or other wireless device. If a change is not detected, the process may proceed to operation 205.

In operation 230, the sense mode is deactivated and the capabilities OS may be activated. For example, the capabilities OS may determine the appropriate computing environment for the apparatus, for example, based on a location indicated (e.g., by the location operating system).

In some embodiments, the capabilities OS may have a directory of different modes or predetermined set of computing environments including, for example, "office mode", "house mode", "automobile mode", and "library mode". In some embodiments, the capabilities OS may select a computing environment from the predetermined set of computing environments based on the change in the location of the apparatus (e.g., determined in operation 225). The selected computing environment may be determined to be substantially the most appropriate computing environment for the changed location.

For example, the capabilities OS may accept location information (e.g., from sensor 40) indicating that the apparatus may be, for example, in the library. In such embodiments, the capabilities OS may determine that, for example, currently, the appropriate computing environment for the apparatus is "library mode". In one embodiment, the policy engine may initiate the modification or setting of the appropriate computing environment for the apparatus, as determined by the capabilities OS. When the capabilities OS determine that, for example, the appropriate computing environment for the apparatus is "library mode", the policy engine, for example, using a control unit, a power control unit, controllers, CPU, or switch, may select or initiate the "library mode" as the current computing environment of the apparatus.

In some embodiments, a processor (e.g., CPU 6) using a power control unit (e.g., power control unit 42), may alter the power mode of one or more components of the apparatus, for example, by increasing the power applied to a processor for activating or starting an application, specified by the appropriate computing environment selected by the capabilities OS. The one or more computing environments in the predetermined set of computing environments may, for example, be generated based on user input. In some embodiments, the computing apparatus or components (e.g., applications, physical modules, etc.) may operate in different ways or be configured in different ways, for example, to have a different power regime, to power up or down certain components, when applying or changing the computing environment of the computing apparatus. For example, applying the selected computing environment may include launching one or more new applications, which may be, for example, specified by the selected computing environment, or may alter the operating mode or power mode of a component: e.g., an internet radio software application may be turned on or off; a monitor may be made brighter, an interface may be put into sleep mode, etc.

In some embodiments, a user may interrupt and/or modify this process by, for example, activating, deactivating, or overriding the activation or deactivation (e.g., by the power control unit), of components or applications that operate according to some embodiments of the invention.

Other operations or series of operations may be used.

Embodiments of the invention may include a computer readable storage medium, such as for example a memory, a disk drive, or a "disk-on-key", including instructions which when executed by a processor or controller, carry out methods disclosed herein.

While the invention has been described with respect to a limited number of embodiments, it will be appreciated that many variations, modifications and other applications of the invention may be made. Embodiments of the present invention may include other apparatuses for performing the operations herein. Such apparatuses may integrate the elements discussed, or may comprise alternative components to carry out the same purpose. It will be appreciated by persons skilled in the art that the appended claims are intended to cover all such modifications and changes as fall within the true spirit of the invention.

## Claims

1. A method comprising:
in a computing apparatus, periodically activating a location operating system detecting a substantial change in the location of the apparatus;
selecting a computing environment from a predetermined set of computing environments based on the change in the location of the apparatus, where the selected computing environment is the most appropriate computing environment for the changed location; and
altering the power mode of one or more components of the apparatus, specified by the selected computing environment.

2. The method of claim 1, wherein detecting a substantial change in the location of the apparatus is based on signals transmitted in a surrounding area.

3. The method of claim 1, wherein altering the power mode of one or more components of the apparatus includes increasing the power applied to a processor for activating an application specified by the selected computing environment.

4. The method of claim 1, wherein activating the location operating system comprises increasing the power applied to a sensor for changing the state of the sensor from a power save mode to an active mode.

5. The method of claim 1, further comprising periodically deactivating the location operating system by decreasing the power applied to a sensor for changing the state of the sensor from an active mode to a power save mode.

6. The method of claim 1, wherein one or more computing environments in the predetermined set of computing environments may be generated based on user input.

7. The method of claim 1, wherein the signals comprise image data.

8. An apparatus comprising:
a controller arranged periodically to activate a location operating system detecting a substantial change in the location of the apparatus;
a policy engine arranged to select a computing environment from a predetermined set of computing environments based on the change in the location of the apparatus, where the selected computing environment is the most appropriate computing environment for the changed location; and
a power control unit arranged to alter the power mode of one or more components of the apparatus, specified by the selected computing environment.

9. The apparatus of claim 8, arranged to detect a substantial change in the location of the apparatus based on signals transmitted in a surrounding area.

10. The apparatus of claim 8, wherein being arranged to alter the power mode of one or more components of the apparatus includes being arranged to increase the power applied to the processor for activating an application specified by the selected computing environment

11. The apparatus of claim 8, wherein being arranged to activate the location operating system comprises being arranged to increase the power applied to a sensor for changing the state of the sensor from a power save mode to an active mode.

12. The apparatus of claim 8, wherein the controller is arranged periodically to deactivate the location operating system by decreasing the power applied to a sensor for changing the state of the sensor from an active mode to a power save mode.

13. The apparatus of claim 8, further comprising a timer arranged to indicate when a predetermined time interval for periodically activating the location operating system has elapsed.

14. A computer program product comprising program code means arranged to perform all the steps of the method as claimed in any of claims 1 to 8, when that program code means is run on a computer.

15. A computer-readable medium embodying a computer program product as claimed in claim 14.
